# EUROPÄISCHE PATENTSCHRIFT

(11) **EP 1 732 420 B1**
(45) Veröffentlichungstag und Bekanntmachung des Hinweises auf die Patenterteilung: **10.06.2009**
(21) Anmeldenummer: 05729847.3
(22) Anmeldetag: 31.03.2005
(51) Int. Cl.: A47J 19/02, A47J 43/08, H02K 5/04

(54) **HAUSHALTSGERÄT MIT EINER MOTORHALTERUNG**
DOMESTIC APPLIANCE COMPRISING A MOTOR SUPPORT
APPAREIL ELECTROMENAGER A SUPPORT MOTEUR

(30) Priorität: 31.03.2004 DE 102004015916
(43) Veröffentlichungstag der Anmeldung: 20.12.2006
(73) Patentinhaber: BSH Bosch und Siemens Hausgeräte GmbH, 81739 München (DE)
(72) Erfinder: MAZEJ, Stanislav, 3303 Gomilsko (SI); OGRIZEK, Darko, 3320 Velenje (SI); SEDOVSEK, Aleksander, 3330 Mozirje (SI); SEMEJA, Uros, 3327 Smartno ob Paki (SI); ZIBRET, Igor, 3327 Smartno ob Paki (SI)
(86) Internationale Anmeldenummer: PCT/EP2005/051460
(87) Internationale Veröffentlichungsnummer: WO 2005/094640

(56) Entgegenhaltungen:
- DE-A1- 3 639 804
- FR-A- 2 758 451
- US-A- 2 481 010
- US-A- 5 417 152

## Beschreibung

Die Erfindung betrifft ein elektromotorisch betriebenes Haushaltsgerät, insbesondere eine Saftzentrifuge, mit einem Gehäuse, in dem ein Motor zum Antrieb eines Arbeitswerkzeuges, insbesondere eines Siebkorbes durch Haltemittel schwingungsdämpfend gelagert ist.

Aus DE 36 39 804 A1 ist eine Haushaltssaftzentrifuge bekannt, die einen Antriebsmotor aufweist, der über am Umfang eines Unterteils gleichmäßig verteilte Gummipuffer schwingungsfrei gelagert ist. Die dortige schwingungsarme Motorlagerung ist jedoch sehr kompliziert aufgebaut und nur mit erheblichem Aufwand zu montieren.

Aufgabe der Erfindung ist es, eine schwingungsarme Motorlagerung für Haushaltsgeräte zu schaffen, die kostengünstig hergestellt und in einfacher Weise montiert werden kann.

Erfindungsgemäß wird diese Aufgabe bei einem gattungsgemäßen Haushaltsgerät dadurch gelöst, dass die Haltemittel Tragarme mit biegeelastischen Tragarmabschnitten aufweisen. Durch eine den Tragarmen innenwohnende Elastizität sind gesonderte Schwingungsdämpfer entbehrlich. Durch eine direkte Anformung von elastischen Abschnitten an die Tragarme für den Motor entfallen zusätzlich Befestigungsmittel um die schwingungsdämpfenden Bauteile mit den Tragarmen des Motors zu verbinden. Dadurch ist nicht nur die Herstellung des Haushaltsgerätes kostengünstiger möglich, sondern auch die Montage ist vereinfacht.

Für eine besonders gute schwingungsdämpfende Lagerung können die Tragarme zur hängenden Lagerung des Motors als sich im wesentlichen längs zur Drehachse des Motors erstreckende Haltelaschen ausgebildet sein. Durch diese Ausgestaltung ist der Motor in senkrechter Richtung d.h. in Schwerkraftrichtung sehr stabil gehalten, seitlich können sich die elastischen, bzw. vorzugsweise biegeelastischen Tragarmabschnitte jedoch in einem gewissen Maße elastisch ausweichen, so dass eine ausreichende Schwingungsdämpfung erreicht wird.

Für eine kostengünstige Herstellung sind die Haltelaschen und die elastischen Tragarmabschnitte vorzugsweise einteilig aus thermoplastischem Kunststoff hergestellt.

In einer bevorzugten Ausgestaltung der Erfindung sind die biegeelastischen Tragarmabschnitte zwischen ersten, am Gehäuse gehaltenen Endabschnitten und zweiten, an einem Motorträger gehaltenen Endabschnitten der Tragarme angeordnet. So ist eine stabile Befestigung der Tragarme bzw. des Motors im Gehäuse unter Beibehaltung der biegeelastischen Eigenschaften in einem mittleren Bereich der Tragarme sichergestellt. Vorzugsweise sind die ersten Endabschnitte starr ausgebildet und am Gehäuse befestigt.

Die ersten Endabschnitte der Tragarme können durch ineinandergreifende Rast- und Gegenrastmittel an der Innenseite einer Seitenwand des Gehäuses gehalten sein. Dazu können die Rastmittel Rastausnehmungen aufweisen, die in als Rastnasen ausgebildete Gegenrastmittel eingreifen. Bei der Montage wird der Motorträger zusammen mit dem vormontierten Motor nur noch in das Gehäuse in einem Arbeitsschritt eingehängt. Die Verrastung erfolgt vorzugsweise allein aufgrund der Gewichtskraft von Motorträger und Motor, so dass keine zusätzlichen Montageschritte erforderlich sind, um den Motorträger im Gehäuse zu fixieren.

Zusätzlich können die ersten Endabschnitte der Tragarme durch Sicherungsmittel gegen Lösen der an der Innenseite der Seitenwand des Gehäuses angeordneten Rast- und Gegenrastmittel gesichert sein. Nach einsetzen des Motorträgers zusammen mit dem Motor in einem Montageschritt ist nur noch ein weiterer Montageschritt erforderlich, nämlich das Einschnappen des Gehäuseteils in das Gehäuse. Unmittelbar dadurch ist auch der Motor zusammen mit dem Motorträger und den Tragarmen zuverlässig befestigt. Insbesondere können gesonderte Befestigungsmittel wie bspw. Schrauben entfallen.

Dabei ist das Sicherungsmittel vorzugsweise als ein in das Haushaltsgerät einsetzbares Gehäuseteil ausgebildet, durch das die Endabschnitte der Tragarme gegen die Innenseite der Seitenwand des Gehäuses gedrückt sind.

Das einsetzbare Gehäuseteil und ein die Endabschnitte der Tragarme tragender Wandabschnitt der Seitenwand des Gehäuse können vorteilhafter Weise konisch ausgebildet und die Endabschnitte der Tragarme zwischen Gehäuseteil und Wandabschnitt gehalten sein.

Als zusätzliche Sicherungsmaßnahme können zur Befestigung des einsetzbaren Gehäuseteils an der Innenseite der Seitenwand des Gehäuses nach innen vorspringende Rippen angeordnet sein, die in zugeordnete Ausnehmungen am einsetzbaren Gehäuseteil eingreifen.

Vorzugsweise sind die Ausnehmungen randoffen ausgebildet und an einer oberen Kante des einsetzbaren Gehäuseteils angeordnet sind.

Ergänzend kann der Motorträger unter Bildung eines zwischen Motor und Motorträger verlaufenden Kühlluftspaltes als ein den Motor mantelartig umgebender Lagertopf ausgebildet sein.

Für eine kostengünstige Herstellung kann der Lagertopf insbesondere an den zweiten Endabschnitten der Tragarme angeformt sein.

Ein bevorzugtes Ausführungsbeispiel der Erfindung ist anhand der Figuren 1 bis 4 im folgenden näher erläutert.

Es zeigen:

Figur 1 eine perspektivische Ansicht einer Saftzentrifuge, die erfindungsgemäße Haltemittel für den Motor aufweist;

Figur 2 eine Schnittansicht der Saftzentrifuge aus Figur 1 mit den erfindungsgemäßen Haltemitteln für den Motor;

Figur 3 eine Teilschnittansicht durch ein erfindungsgemäßes Haltemittel gemäß Figur 2 und einem Wandabschnitt des Gehäuses mit Gegenhaltemitteln;

Figur 4 eine perspektivische Ansicht eines Motorträgers, der die erfindungsgemäßen Haltemittel aufweist.

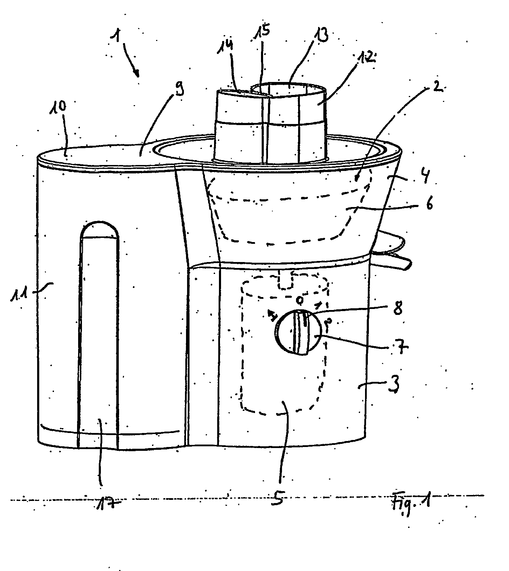

Eine in Figur 1 dargestellte Saftzentrifuge 1 weist ein Gehäuse 2 auf, das ein im wesentlichen hohlzylindrisches Unterteil 3 und ein konisch geformtes Oberteil 4 umfasst. Nur verdeckt schematisch sind ein im Unterteil 3 angeordneter Antriebsmotor 5 für ein im Oberteil 4 drehbar gelagertes Arbeitswerkzeug 6 gezeigt. Der elektrisch betreibbare Antriebsmotor 5 ist über ein drehbares Betätigungselement 7 steuerbar. Das Betätigungselement 7 ist als Drehknebel ausgebildet und an einer vorderen Seitenwand des hohlzylindrischen Unterteils 3 angebracht. In der dargestellten Drehposition des Betätigungselements 7 zeigt eine Strichmarkierung 8 die Schalterstellung "0" an, in der das Haushaltsgerät außer Betrieb gesetzt ist. In einer im Uhrzeigersinn weiter rechts gelegenen Schalterstellung "I" des Betätigungselements 7 ist die Saftzentrifuge 1 mit einer niedrigen Drehzahl angetrieben und in einer noch weiter rechts gelegenen Schalterstellung "II" des Betätigungselements 7 ist die Saftzentrifuge 1 mit einer hohen Drehzahl angetrieben. In einer im Uhrzeigesinn links von der Schalterstellung "0" gelegenen Schalterstellung "A" befindet sich das Betätigungselement 7 in einer Entriegelungsposition 18, in der ein Gerätedeckel 9 aus seiner Verriegelungsposition lösbar ist, so dass bei abgenommenen Gerätedeckel 9 das Arbeitswerkzeug 6 entnommen werden kann. Der Gerätedeckel 9 liegt auf einer Oberseite des Gehäuses 2 bündig auf und deckt auch eine obere Öffnung 10 eines Tresterbehälters 11 ab. Der Gerätedeckel 9 trägt einen Einfüllschacht 12 über den Nahrungsmittelstücke in das Gehäuse 2 auf das Arbeitswerkzeug 6 aufbringbar sind. Der Einfüllschacht 12 ist zweiteilig ausgebildet, d.h. es sind zwei Einfüllstutzen 13 und 14 vorhanden, die unterschiedliche Öffnungsquerschnitte aufweisen und die durch eine Schachtwand 15 voneinander getrennt sind. Die Einfüllstutzen 13 und 14 haben einen im wesentlichen kreisrunden bis ovalen Querschnitt, wobei der Querschnitt des Einfüllstutzens 13 größer als der Querschnitt des Einfüllstutzens 14 ausgebildet ist. Die über den Einfüllstutzen 13 oder 14 eingebrachten Nahrungsmittelstücke werden durch das Arbeitswerkzeug 6 in überwiegend feste Tresteranteile und in Saftanteile getrennt. Die Tresteranteile werden nach der Trennung im Tresterbehälter 11 gesammelt und die Saftanteile in einen Auffangbehälter 16 weitergeleitet. Der Tresterbehälter 11 weist an zwei gegenüberliegenden Behälterwänden muldenartig nach innen zurückspringende, rinnenförmige Griffbereiche 17 auf.

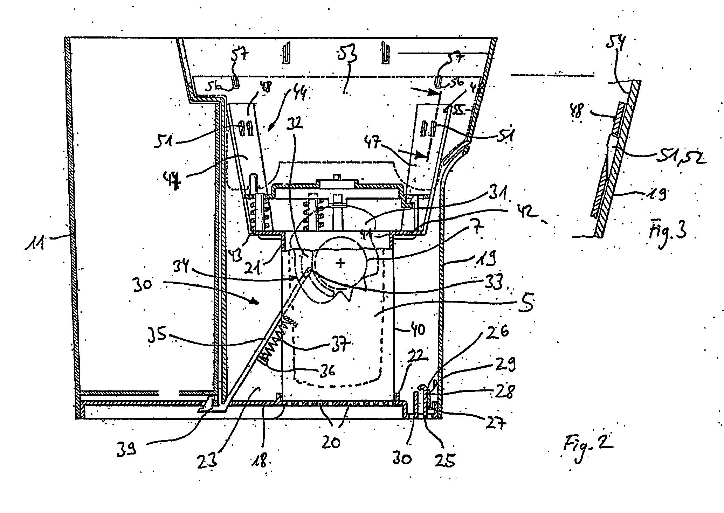

Das in Figur 2 in einer Schnittansicht dargestellte Gehäuse 2 weist ein erstes Gehäuseteil 18 und ein zweites Gehäuseteil 19 auf. Das erste Gehäuseteil 18 bildet einen Boden der Saftzentrifuge 1, der zur Kühlung des Motors 5 mit Luftdurchtritten 20 versehen ist. Der Motor 5 ist in einem Motorträger 21 gehalten, der in einem am ersten Gehäuseteil 18 angeformten Sitz 22 geführt ist. Der Sitz 22 erstreckt sich als ringförmiger Vorsprung von der Innenseite des ersten Gehäuseteils 18 in einen Aufnahmeraum 23 für den Motorträger 21 des Motors 5. Damit der Motorträger 21 selbstzentrierend in den ringförmigen Sitz 22 einsetzbar ist, weist die obere Kante des Sitzes 22 eine Fase 24 auf. Das als Bodenplatte ausgebildete erste Gehäuseteil 18 trägt ein Rastmittel 25. Das Rastmittel 25 ist als eine an dem ersten Gehäuseteil 18 angeformte Lasche ausgebildet, die einen federnden Rasthaken 26 trägt. In seiner verrasteten Position hintergreift der Rasthaken 26 des Rastmittels 25 ein Gegenrastmittel 27 am zweiten Gehäuseteil 19. Das Gegenrastmittel 27 ist als Rastvorsprung 28 ausgebildet. Für eine zusätzliche stabile Verbindung von erstem Gehäuseteil 18 und zweitem Gehäuseteil 19 ist am ersten Gehäuseteil 18 eine Rastausnehmung 29 angeformt, in die der Rastvorsprung 28 des zweiten Gehäuseteils 19 eingreift. Das erste Gehäuseteil 18 und das zweite Gehäuseteil 19 sind an mehreren Stellen über eine Anzahl von Rastmittel 25 und Gegenrastmittel 27 verbunden. Diese Verbindungsstellen sind vorzugsweise zumindest annähernd gleichmäßig über den Umfang des Gehäuses 2 verteilt angeordnet.

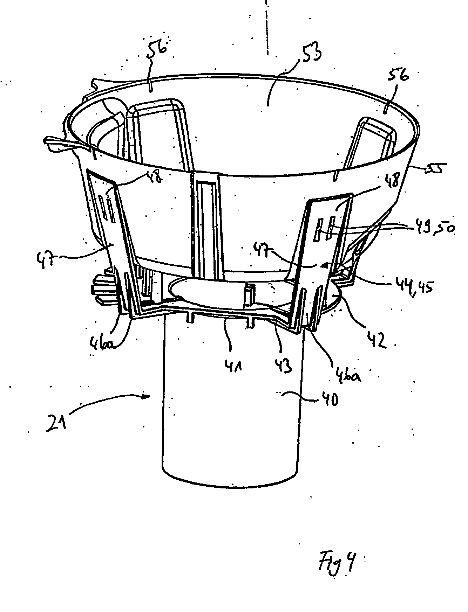

Eine zusätzliche Tresterbehälter-Sicherheitseinrichtung 30 weist einen mit dem Betätigungselement 7 verbundenen Kulissenträger 31 auf. Der Kulissenträger 31 ist zusammen mit dem Betätigungselement 7 drehbar am Gehäuseteil 19 gelagert. Der Kulissenträger 31 weist eine Kulisse 32 auf, in der ein als Zapfen 33 ausgebildetes Sperrelement 34 eingreift. Das Sperrelement 34 bzw. der Zapfen 33 ist mit einem Schieber 35 verbunden, der verschiebbar im Gehäuse 2 gelagert ist. Der Schieber 35 weist einen Vorsprung 36 auf, an dem ein erstes Ende eines als Federwendel ausgebildetes Spannelement 37 aufsitzt. Ein zweites Ende des Spannelements 37 stützt sich am Gehäuseteil 19 ab. In den erfindungsgemäßen Motorträger 21 ist der Motor 5 eingesetzt. Der Motorträger weist einen hohlzylindrischen Topfteil 40 auf. An einem oberen stirnseitigen Ende 41 des Topfteils 40 schließt sich ein ringscheibenförmiger Boden 42 an. An einer äußeren Kante 43 sind vorzugsweise vier gleichmäßig über den Umfang verteilte Tragarme 44 vorgesehen. Die Tragarme 44 sind als Haltelaschen 45 ausgebildet und weisen eine im wesentlichen streifenartige Gestalt auf. Untere zweite Endabschnitte 46 der Tragarme 44 sind starr an dem Boden 42 angeformt. Zur Erhöhung der Steifigkeit sind zwei parallel zueinander angeordnete um einen Eckbereich verlaufende Versteifungsrippen 46a an die Tragarme 44 angeformt. In einem mittleren Bereich weisen die Tragarme 44 elastische, vorzugsweise biegeelastische Tragarmabschnitte 47 auf. An oberen ersten Endabschnitten 48 der Tragarme 44 sind als Rastausnehmungen 49 ausgebildete Rastmittel 50 vorgesehen. Wie in Figur 3 und 4 gezeigt, sind zu den Rastausnehmungen 49 der Tragarme 44 zugehörige Gegenrastmittel 51 am Gehäuse 2 vorgesehen, die als in die Rastausnehmungen 49 eingreifende Rastnasen 52 ausgebildet sind. Die Tragarme 44 sind durch die Rastausnehmungen 49 an den Rastnasen 52 in hängender Weise gelagert. Um ein ungewolltes Abspringen der oberen ersten Endabschnitten 48 der Tragarme 44 von den Rastnasen 52 zu verhindern, sind die oberen ersten Endabschnitten 48 durch ein in das Gehäuse 2 von oben eingesetztes Gehäuseteil 53 an den Rastnasen 52 in einer nach außen drückenden Position an einer Innenwand 54 der Seitenwand 19 angedrückt. Für ein zuverlässiges Andrücken der biegeelastischen Tragarme 44 gegen die einer Innenwand 54 der Seitenwand 19 können sowohl die Seitenwand 19 als auch eine Seitenwand 55 des Gehäuseteils 53 konisch geformt sein. Um ein Ausweichen des konischen Gehäuseteils 53 nach oben zu verhindern, sind am Gehäuseteil 53 mehrere randoffene Ausnehmungen 56 vorgesehen, in die an der Innenwand 54 der Seitenwand 19 vorgesehene, vorspringende Rippen 57 eingreifen.

## Patentansprüche

1. Elektromotorisch betriebenes Haushaltsgerät, insbesondere Saftzentrifuge (1), mit einem Gehäuse (2), in dem ein Motor (5) zum Antrieb eines Arbeitswerkzeuges (6), insbesondere eines Siebkorbes durch Haltemittel schwingungsdämpfend gelagert ist, **dadurch gekennzeichnet, dass** zur Schwingungsdämpfung die Haltemittel Tragarme (44) mit biegeelastischen Tragarmabschnitten (47) aufweisen.

2. Haushaltsgerät nach Anspruch 1, **dadurch gekennzeichnet, dass** die Tragarme (44) zur hängenden Lagerung des Motors (5) als sich im wesentlichen längs zur Drehachse des Motors (5) erstreckende Haltelaschen (45) ausgebildet sind.

3. Haushaltsgerät nach Anspruch 2, **dadurch gekennzeichnet, dass** die Haltelaschen (45) und die biegeelastischen Tragarmabschnitte (47) einteilig aus thermoplastischen Kunststoff hergestellt sind.

4. Haushaltsgerät nach einem der Ansprüche 1 bis 3, **dadurch gekennzeichnet, dass** die biegeelastischen Tragarmabschnitte (47) zwischen ersten, am Gehäuse (2) gehaltenen Endabschnitten (48) und zweiten, an einem Motorträger (21) gehaltenen Endabschnitten (46) der Tragarme (44) angeordnet sind.

5. Haushaltsgerät nach Anspruch 4, **dadurch gekennzeichnet, dass** die ersten Endabschnitte (48) starr ausgebildet und am Gehäuse (2) befestigt sind.

6. Haushaltsgerät nach Anspruch 5, **dadurch gekennzeichnet, dass** die ersten Endabschnitte (48) der Tragarme (44) durch ineinandergreifende Rast (50)- und Gegenrastmittel (51) an der Innenseite einer Seitenwand (19) des Gehäuses (2) gehalten ist.

7. Haushaltsgerät nach Anspruch 6, **dadurch gekennzeichnet, dass** die Rastmittel (50) Rastausnehmungen (49) aufweisen, die in als Rastnasen (52) ausgebildete Gegenrastmittel (51) eingreifen.

8. Haushaltsgerät nach Anspruch 6 oder 7, **dadurch gekennzeichnet, dass** die ersten Endabschnitte (48) der Tragarme (44) durch Sicherungsmittel gegen Lösen der an der Innenseite der Seitenwand (19) des Gehäuse (2) angeordneten Rast- und Gegenrastmittel gesichert sind.

9. Haushaltsgerät nach Anspruch 8, **dadurch gekennzeichnet, dass** das Sicherungsmittel ein in das Haushaltsgerät einsetzbares Gehäuseteil (53) ist, durch das die Endabschnitte (48) der Tragarme (44) gegen die Innenseite der Seitenwand (19) des Gehäuses (2) gedrückt sind.

10. Haushaltsgerät nach Anspruch 9, **dadurch gekennzeichnet, dass** das einsetzbare Gehäuseteil (53) und ein die ersten Endabschnitte (48) der Tragarme (44) tragender Wandabschnitt der Seitenwand (19) des Gehäuse (2) konisch ausgebildet sind und die ersten Endabschnitte (48) der Tragarme (44) zwischen Gehäuseteil (2) und dem Wandabschnitt der Seitenwand (19) gehalten ist.

11. Haushaltsgerät nach Anspruch 10, **dadurch gekennzeichnet, dass** zur Befestigung des einsetzbaren Gehäuseteils (53) an der Innenseite der Seitenwand (19) des Gehäuses (2) nach innen vorspringende Rippen (57) angeordnet sind, die in zugeordnete Ausnehmungen (56) am einsetzbaren Gehäuseteil (53) eingreifen.

12. Haushaltsgerät nach Anspruch 11, **dadurch gekennzeichnet, dass** die Ausnehmungen (56) randoffen ausgebildet und an einer oberen Kante des einsetzbaren Gehäuseteils (53) angeordnet sind.

13. Haushaltsgerät nach einem der Ansprüche 4 bis 12, **dadurch gekennzeichnet, dass** der Motorträger (40) unter Bildung eines zwischen Motor (5) und Motorträger (40) verlaufenden Kühlluftspaltes als ein den Motor (5) mantelartig umgebender Lagertopf ausgebildet ist.

14. Haushaltsgerät nach Anspruch 13, **dadurch gekennzeichnet, dass** der Lagertopf an den zweiten Endabschnitten (46) der Tragarme (44) angeformt ist.

## Claims

1. Domestic appliance operated by electric motor, particularly juice centrifuge (1), with a housing (2) in which a motor (5) for drive of a work tool (6), particularly a sieve basket, is mounted by holding means to be damped with respect to vibration, **characterised in that** for the vibration damping the holding means comprise support arms (44) with resilient support arm sections (47).

2. Domestic appliance according to claim 1, **characterised in that** the support arms (44) are constructed for suspended mounting of the motor (5) as holding straps (45) extending substantially longitudinally with respect to the axis of rotation of the motor (5).

3. Domestic appliance according to claim 2, **characterised in that** the holding straps (45) and the resilient support arm sections (47) are produced integrally from thermoplastic plastics material.

4. Domestic appliance according to any one of claims 1 to 3, **characterised in that** the resilient support arm sections (47) are arranged between first end sections (48), which are held at the housing (2), and second end sections (46), which are held at a motor carrier (21), of the support arms (44).

5. Domestic appliance according to claim 4, **characterised in that** the first end sections (48) are of rigid construction and fastened to the housing (2).

6. Domestic appliance according to claim 5, **characterised in that** the first end sections (48) of the support arms (44) are held by interengaging detent means (50) and counter-detent means (51) at the inner side of a side wall (19) of the housing (2).

7. Domestic appliance according to claim 6, **characterised in that** the detent means (50) have detent recesses (49) engaging in the counter-detent means (51) constructed as detent lugs (52).

8. Domestic appliance according to claim 6 or 7, **characterised in that** the first end sections (48) of the support arms (44) are secured by securing means against detaching of the detent means and counter-detent means arranged at the inner side of the side wall (19) of the housing (2).

9. Domestic appliance according to claim 8, **characterised in that** the securing means is a housing part (53) which is insertable into the domestic appliance and by which the end sections (48) of the support arms (44) are pressed against the inner side of the side wall (19) of the housing (2).

10. Domestic appliance according to claim 9, **characterised in that** the insertable housing part (53) and a wall section, which carries the first end sections (48) of the support arms (44), of the side wall (19) of the housing (2) are of conical construction and the first end sections (48) of the support arms (44) are held between housing part (2) and the wall section of the side wall (19).

11. Domestic appliance according to claim 10, **characterised in that** inwardly projecting ribs (57) engaging in associated recesses (56) at the insertable housing part (53) are arranged for fastening of the insertable housing part (53) to the inner side of the side wall (19) of the housing (2).

12. Domestic appliance to claim 11, **characterised in that** the recesses (56) are formed to be open at the edge and are arranged at an upper edge of the insertable housing part (53).

13. Domestic appliance according to any one of claims 4 to 12, **characterised in that** the motor carrier (40) is constructed, with formation of a cooling air gap extending between motor (5) and motor carrier (40), as a bearing pot surrounding the motor 5 in the manner of a casing.

14. Domestic appliance according to claim 13, **characterised in that** the bearing pot is formed at the second end sections (46) of the carrier arms (44).

## Revendications

1. Appareil ménager à moteur électrique, notamment centrifugeuse de jus (1), comprenant un boîtier (2) dans lequel un moteur (5) pour l'entraînement d'un outil de travail (6), notamment d'un panier filtre, est monté d'une manière amortissant les vibrations grâce à des moyens de retenue, **caractérisé en ce que** les moyens de retenue comprennent des bras de support (44) comprenant des segments de bras de support (47) élastiques en flexion pour l'amortissement des vibrations.

2. Appareil ménager selon la revendication 1, **caractérisé en ce que** les bras de support (44) sont exécutés en tant que languettes de retenue (45) s'étendant essentiellement dans le sens longitudinal par rapport à l'axe de rotation du moteur (5) pour la suspension du moteur (5).

3. Appareil ménager selon la revendication 2, **caractérisé en ce que** les languettes de retenue (45) et les segments de bras de support (47) élastiques en flexion sont fabriqués d'une seule pièce dans une matière thermoplastique.

4. Appareil ménager selon l'une des revendications 1 à 3, **caractérisé en ce que** les segments de bras de support (47) élastiques en flexion sont situés entre des premiers segments d'extrémité (48) maintenus sur le boîtier (2) et des seconds segments d'extrémité (46) des bras de support (44) maintenus sur un support de moteur (21).

5. Appareil ménager selon la revendication 4, **caractérisé en ce que** les premiers segments d'extrémité (48) sont exécutés de manière rigide et fixés sur le boîtier (2).

6. Appareil ménager selon la revendication 5, **caractérisé en ce que** les premiers segments d'extrémité (48) des bras de support (44) sont maintenus sur le côté intérieur d'une paroi latérale (19) du boîtier (2) grâce à des moyens de verrouillage (50) et de contre-verrouillage (51) s'emboîtant les uns dans les autres.

7. Appareil ménager selon la revendication 6, **caractérisé en ce que** les moyens de verrouillage (50) comprennent des creux d'encliquetage (49) qui s'engagent dans des moyens de contre-verrouillage (51) exécutés en tant qu'ergots d'encliquetage (52).

8. Appareil ménager selon la revendication 6 ou 7, **caractérisé en ce que** les premiers segments d'extrémité (48) des bras de support (44) sont assurés contre une séparation des moyens de verrouillage et de contre-verrouillage situés sur le côté intérieur de la paroi latérale (19) du boîtier (2) par un moyen de sécurité.

9. Appareil ménager selon la revendication 8, **caractérisé en ce que** le moyen de sécurité est une partie de boîtier (53) insérable dans l'appareil ménager, grâce à laquelle les segments d'extrémité (48) des bras de support (44) sont pressés contre le côté intérieur de la paroi latérale (19) du boîtier (2).

10. Appareil ménager selon la revendication 9, **caractérisé en ce que** la partie de boîtier insérable (53) et un segment de paroi de la paroi latérale (19) du boîtier (2) portant les premiers segments d'extrémité (48) des bras de support (44) sont exécutés de manière conique et les premiers segments d'extrémité (48) des bras de support (44) sont maintenus entre la partie de boîtier (2) et le segment de paroi de la paroi latérale (19).

11. Appareil ménager selon la revendication 10, **caractérisé en ce que** des nervures (57) saillantes vers l'intérieur qui s'engagent dans des creux correspondants (56) sur la partie de boîtier insérable (53) sont situées sur le côté intérieur de la paroi latérale (19) du boîtier (2) pour la fixation de la partie de paroi insérable (53).

12. Appareil ménager selon la revendication 11, **caractérisé en ce que** les creux (56) sont exécutés de manière à avoir un bord ouvert et sont situés au niveau d'un bord supérieur de la partie de paroi insérable (53).

13. Appareil ménager selon l'une des revendications 4 à 12, **caractérisé en ce que** le support de moteur (40) est exécuté en tant que marmite entourant le moteur (5) à la manière d'une enveloppe en formant un entrefer qui s'étend entre le moteur (5) et le support de moteur (40).

14. Appareil ménager selon la revendication 13, **caractérisé en ce que** la marmite est solidaire des seconds segments d'extrémité (46) des bras de support (44).
